# EUROPEAN PATENT SPECIFICATION

(11) **EP 1 581 601 B1**
(45) Date of publication and mention of the grant of the patent: **13.08.2008**
(21) Application number: 03813153.8
(22) Date of filing: 16.12.2003
(51) Int. Cl.: C10G 27/04, C10L 3/10

(54) **PROCESS FOR THE CATALYTIC SELECTIVE OXIDATION OF SULPHUR COMPOUNDS**
VERFAHREN ZUR SELEKTIVEN KATALYTISCHEN OXIDATION VON SCHWEFELVERBINDUNGEN
PROCESSUS D'OXYDATION SELECTIVE CATALYTIQUE DE COMPOSES DE SOUFRE

(30) Priority: 17.12.2002 EP 02258672
(43) Date of publication of application: 05.10.2005
(73) Proprietor: SHELL INTERNATIONALE RESEARCH MAATSCHAPPIJ B.V., 2596 HR Den Haag (NL)
(72) Inventor: MESTERS, Carolus Matthias Anna Maria, NL-1031 CM Amsterdam (NL); SCHOONEBEEK, Ronald Jan, NL-1031 CM Amsterdam (NL)
(86) International application number: PCT/EP2003/051015
(87) International publication number: WO 2004/055135

(56) References cited:
- EP-A- 0 482 841
- WO-A-92/20621
- WO-A-20/04050549
- US-A- 2 361 651
- US-A- 2 640 010
- US-A- 3 978 137

## Description

### Field of the invention

The present invention relates to a process for the catalytic selective oxidation of sulphur compounds in a hydrocarbonaceous feedstock to sulphur dioxide.

### Background of the invention

Hydrocarbonaceous feedstock are usually desulphurised in a hydrodesulphurisation process. In this process, the sulphur containing feedstock is contacted with a hydrodesulphurisation catalyst, typically a Co-Mo or Ni-Mo catalyst, in the presence of hydrogen, at elevated temperature and pressure. Hydrodesulphurised hydrocarbonaceous streams still contain sulphur compounds, in particular sulphur compounds that are difficult to remove such as heterocyclic sulphur compounds like thiophenes, benzothiophenes, substituted and condensed ring dibenzothiophenes.

It is known to use catalysts comprising nickel, zinc oxide and alumina for deep desulphurisation of hydrocarbon streams in the presence of hydrogen. These catalysts are able to remove "difficult" sulphur compounds and to achieve sulphur concentrations as low as 0.1 ppm. In WO 01/15804, for example, a catalyst is disclosed having 5-25 wt% Ni, 30-70 wt% ZnO and the remainder alumina. The catalyst of WO 01/15804 has a double function: nickel catalyses the reaction of sulphur with hydrogen to form hydrogen sulphide and zinc oxide absorbs the hydrogen sulphide formed.

It is also known to desulphurise hydrocarbonaceous streams by oxidising the sulphur of the sulphur compounds to sulphur dioxide in a vapour phase process. US 2,640,010, for example, describes the oxidation of sulphur compounds like hydrogen sulphide, mercaptans and disulphides in petroleum hydrocarbons to sulphur dioxide, by passing the vapour of the hydrocarbon over an oxidation catalyst comprising cuprous sulphide. US 2,361,651 describes a process for sweetening and desulphurising sour hydrocarbon distillates by contacting vapours of said distillates in the presence of oxygen with a catalyst comprising copper oxide. The reaction involved in the process is an oxidation of mercaptans, sulphides and disulphides to sulphur dioxide by the action of the copper catalyst in the presence of oxygen.

A disadvantage of he processes disclosed in US 2,640,010 and US 2,361,651 is that "difficult" sulphur compounds like thiophenes are not removed.

In WO 2004/050549, the sulphur dioxide formed is removed via adsorption

### Summary of the invention

It has now been found that also the sulphur from "difficult" sulphur compounds like thiophenes in hydrocarbonaceous streams can be converted into sulphur dioxide by catalytic selective oxidation by using a catalyst comprising a Group VIII noble metal. The thus-formed sulphur dioxide can be removed by processes known in the art. Reference herein to selective oxidation of sulphur compounds is to the oxidation of sulphur compounds with no or minimal oxidation of the non-sulphur containing hydrocarbonaceous compounds.

An advantage of selective oxidation followed by removal of sulphur dioxide is that no hydrogen is needed for the desulphurisation. Another advantage of the vapour phase selective oxidation process is that the process can be performed at ambient pressure. Moreover, with the process according to the invention it is possible to achieve deep desulphurisation without using nickel-containing catalysts.

Accordingly, the present invention relates to a process for the catalytic selective oxidation of sulphur compounds in a hydrocarbonaceous feedstock to sulphur dioxide, wherein a gaseous feed mixture of the hydrocarbonaceous feedstock and a molecular-oxygen containing gas is contacted with a catalyst at a temperature of at most 500 °C, the catalyst comprising a group VIII noble metal on a catalyst carrier, wherein the oxygen-to-carbon ratio of the feed mixture is below 0.15, and wherein the sulphur dioxide formed is removed via solvent extraction using an aqueous amine solution, solvent extraction using an alkaline solution, reaction with lime or conversion into elemental sulphur according to the Claus reaction.

### Detailed description of the invention

Sulphur compounds that can be selectively oxidised by the process according to the invention are for example hydrogen sulphide, mercaptans, disulphides, or heterocyclic sulphur compounds such as thiophenes, benzothiophenes, or substituted and condensed ring dibenzothiophenes.

The hydrocarbonaceous feedstock is a hydrocarbonaceous feedstock that is gaseous under the conditions prevailing at the catalyst surface. Preferred feedstocks are feedstocks that are gaseous at standard temperature and pressure (STP; 0 °C, 1 atm.) conditions such as methane, natural gas, LPG and other gaseous hydrocarbon streams. Further, feedstocks that are liquid under STP conditions but gaseous at the conditions prevailing at the catalyst surface such as naphtha, diesel or gasoline are suitable feedstocks.

The catalyst of the process according to the invention comprises as catalyst carrier an oxidising solid surface, typically in the form of solid particles.

Reference herein to an oxidising surface is to a surface that is able to activate molecular oxygen. Preferably, the catalyst carrier comprises a refractory oxide. Refractory oxides such as stabilised and partially stabilised zirconia, ceria, yttria, silica, alumina, titania and combinations thereof are particularly suitable. A catalyst carrier comprising stabilised or partially stabilised zirconia is most preferred.

Alternatively, the catalyst carrier may comprise a non-refractory oxide bulk material having an oxidising surface. Examples of such materials are a Fe, Cr and Al containing alloy (commercialised as FECRALLOY) with an alumina or zirconia surface layer (FECRALLOY is a trademark).

The catalyst comprises one or more catalytically active metals supported on the solid surface or carrier. These catalytically active metals are Group VIII noble metals, more preferably platinum, rhodium, iridium or a combination of two or more thereof. Typically, the catalyst comprises the catalytically active metal(s) in a concentration in the range of from 0.02 to 10% by weight, based on the total weight of the catalyst, preferably in the range of from 0.1 to 5% by weight. The catalyst may further comprise a performance-enhancing inorganic metal cation selected from A1, Mg, Zr, Ti, La, Hf, Si, Ba, and Ce which is present in intimate association supported on or with the catalytically active metal, preferably a zirconium and/or cerium cation.

Catalysts comprising a noble metal on a carrier are also suitable for the catalytic partial oxidation of hydrocarbons, typical at temperatures above 700 °C. It has been found that at much lower temperatures, typically between 200 and 500 °C, the oxidation of sulphur compounds takes preferentially place as compared to the oxidation of hydrocarbons.

In order to prevent degradation of hydrocarbon compounds, the process temperature is maintained at at most 500 °C. Preferably, the process temperature is in the range of from 200 to 500 °C, more preferably of from 200 to 300 °C.

The pressure at which the feed mixture is contacted with the catalyst is preferably in the range of from 1 to 10 bar (absolute), more preferably of from 1 to 5 bar (absolute). Most preferably, the feed mixture is contacted with the catalyst at ambient pressure.

The molecular-oxygen containing gas may be oxygen, air or oxygen-enriched air. Preferably, air is used as molecular-oxygen containing gas.

It will be appreciated that the exact process conditions, such as the temperature at which the catalyst is maintained, pressure, gas or liquid velocity and the oxygen-to-carbon ratio in the feed mixture, will inter alia depend on the catalyst used, the required sulphur conversion and selectivity, and the boiling characteristics of the hydrocarbonaceous feedstock.

The oxygen-to-carbon ratio of the feed mixture is at most 0.15, preferably at most 0.10. Reference herein to the oxygen-to-carbon ratio is to the ratio of oxygen in the form of molecules (O₂) to carbon atoms present in the hydrocarbonaceous feedstock.

The process according to the invention is very suitable for deep desulphurisation of hydrocarbonaceous streams. It is particularly suitable for the removal of hydrogen sulphide from gaseous hydrocarbonaceous steams comprising up to 10% v/v hydrogen sulphide or the removal of "difficult" sulphur compounds from liquid hydrocarbonaceous steams comprising up to 1000 ppmw sulphur.

The sulphur dioxide formed is removed via solvent extraction using an aqueous amine solution, solvent extraction using an alkaline solution, absorption on copper, barium or cerium oxide, reaction with lime or conversion into elemental sulphur. In liquid feedstocks, sulphur dioxide may for example be removed by distillation or stripping. Suitable techniques known in the art for the removal of sulphur dioxide from gaseous feedstocks are for example solvent-extraction using an aqueous amine solution or an alkaline solution, or reaction with lime to produce gypsum.

In order to remove larger amounts of hydrogen sulphide from gaseous hydrocarbonaceous feedstocks, the selective oxidation process according to the invention can suitably be applied in combination with a process for the conversion of H₂S/SO₂ mixtures into elemental sulphur according to the well-known Claus reaction:

2H₂S + SO₂ → 3 S + 2 H₂O

Part of the hydrogen sulphide, preferably about one third of the total volumetric amount of hydrogen sulphide, is then converted into sulphur dioxide by the catalytic selective oxidation process according to the invention.

The process according to the invention will be further illustrated by the following non-limiting examples.

### EXAMPLE 1

### Catalyst preparation

### Catalyst 1

Particles (1 mm average diameter) of zirconia partially stabilised with yttria (Y-PSZ) were coated with a zirconia paint (zirconium oxide partially-stabilised with 4 %wt CaO; type ZO; ex. ZYP Coatings Inc., Oak Ridge, USA) and provided with 0.9 wt% Rh, 0.9 wt% Ir, 0.6 wt% Zr, 1.9 wt% Ce by impregnating the painted particles with a solution containing rhodium tri chloride, iridium tetra chloride, zirconyl nitrate and cerium nitrate. The impregnated particles were dried at 140 °C during 2 hours and calcined at 700 °C during 2 hours.

### Catalyst 2 (comparative)

Particles (1 mm average diameter) of zirconia partially stabilised with yttria (Y-PSZ) were coated with a zirconia paint (see above under catalyst 1) and provided with 0.5 wt% Zr, 1.6 wt% Ce by impregnating the painted particles with a solution containing zirconyl nitrate and cerium nitrate. The impregnated particles were dried at 140 °C during 2 hours and calcined at 700 °C during 2 hours.

### Catalyst 3

Particles (30-80 mesh) of Y-PSZ were coated with a zirconia paint (see above under catalyst 1) and provided with 1.6 wt% Rh, 1.0 wt% Zr, 1.6 wt% Ce by impregnating the painted particles with a solution containing rhodium tri chloride, zirconyl nitrate and cerium nitrate. The impregnated particles were dried at 140 °C during 2 hours and calcined at 700 °C during 2 hours.

### Catalyst 4

Particles (30-80 mesh) of zirconia-toughened alumina partially stabilised with ceria (Ce-ZTA) were impregnated with a solution containing H₂PtCl₆ and zirconyl nitrate. The impregnated particles were dried at 140 °C during 2 hours and calcined at 700 °C during 2 hours. The resulting catalyst particles contained 5 wt% Pt and 7 wt% Zr.

### Catalyst 5

Calcined (2 hours at 1000 °C) particles (30-80 mesh) of alumina stabilised with magnesium oxide were provided with 0.6 wt% Ir by impregnating the particles with a iridium tetra chloride containing solution. The impregnated particles were dried (2 hours at 120 °C) and calcined (2 hours at 700 °C).

### Catalyst 6

Particles (1 mm average diameter) Y-PSZ were coated with a zirconia paint and provided with 0.8 wt% Rh, 0.8 wt% Ir, 0.6 wt% Zr, 1.7 wt% Ce by impregnating the painted particles with a solution containing rhodium tri chloride, iridium tetra chloride, zirconyl nitrate and cerium nitrate. The impregnated particles were dried at 140 °C during 2 hours and calcined at 700 °C during 2 hours.

### Catalytic selective oxidation

Approximately 1 g of catalyst particles were loaded in a 6 mm inner diameter reactor tube. A gas mixture of air and H₂S-containing methane was passed over the catalyst particles at elevated temperature and at ambient pressure.

In Table 1, the H₂S concentration of the H₂S-containing methane, the oxygen-to-carbon ratio of the air/methane mixture, the gas space velocity (N1 feed mixture per kg catalyst per hour), the temperature at which the catalyst is maintained, the H₂S conversion and the selectivity are given for each catalyst. The selectivity is calculated as the quotient of the molar SO₂/CO₂ ratio in the effluent and the S/C ratio in the feed.

It can be seen from the results in Table 1 that very high H₂S conversions are obtained when the methane feed is oxidised over a catalyst comprising Pt, Rh and/or Ir (catalysts 1, 3-6). When a catalyst without catalytically active metal is used (catalyst 2), the temperature has to be increased above 500 °C in order to achieve such a high conversion.

**Table 1 Selective oxidation of H₂S in methane: feed composition, process conditions and results.**

| Catalyst No. | 1 | | 2 (comparison) | | 3 | 4 | 5 | 6 |
|---|---|---|---|---|---|---|---|---|
| H₂S (% v/v) | 2.8 | 2.0 | 2.5 | 2.5 | 2.0 | 1.7 | 1.5 | 1.6 |
| O₂:C | 0.06 | 0.04 | 0.05 | 0.05 | 0.05 | 0.07 | 0.05 | 0.06 |
| GSV (Nl/kg/h) | 7,000 | 7,000 | 7,000 | 7,000 | 7,000 | 7,000 | 13,000 | 7,000 |
| T (°C) | 360 | 459 | 413 | 553 | 470 | 458 | 467 | 433 |
| H₂S conversion (%) | 99.9 | 99.7 | 73.7 | 99.9 | 97.1 | 94.7 | 95.2 | 96.7 |
| selectivity | 222 | 373 | 5070 | 8400 | 53 | 57 | 57 | 57 |

### EXAMPLE 2

0.95 g of particles of catalyst 1 were loaded in a 6 mm inner diameter reactor tube. A gas mixture of air and thiophene-containing methane was passed over the catalyst particles at elevated temperature and ambient pressure. Two different experiments with different feed composition and different process conditions were carried out.

In Table 2, the sulphur concentration of the methane, the oxygen-to-carbon ratio of the air/methane mixture, the gas space velocity (N1 feed mixture per kg catalyst per hour), the temperature at which the catalyst is maintained, the thiophene conversion and the selectivity are given for the two experiments. The selectivity is calculated as the quotient of the molar SO₂/CO₂ ratio in the effluent and the S/C ratio in the feed.

**Table 2 Selective oxidation of thiophene in methane: feed composition, process conditions and results.**

| experiment | a | b |
|---|---|---|
| ppmw S | 11,400 | 300 |
| O₂:C | 0.05 | 0.02 |
| GSV (Nl/kg/h) | 8,000 | 7,000 |
| T (°C) | 391 | 304 |
| thiophenes conversion (%) | 99.8 | 79.9 |
| selectivity | 28 | 1816 |

### EXAMPLE 3

0.94 g of particles of catalyst 1 were loaded in a 6 mm inner diameter reactor tube. A mixture of air and thiophene-containing naphtha was passed over the catalyst particles at a temperature of 320 °C and ambient pressure. The naphtha had a boiling range of 40-180 °C, a H/C ratio of 1.8, a density of 0.74 g/ml.

In Table 3, the sulphur concentration of the naphtha, the oxygen-to-carbon ratio of the air/naphtha mixture, the liquid space velocity (kg naphtha per kg catalyst per hour), the temperature at which the catalyst is maintained, the thiophene conversion and the selectivity are given. The selectivity is calculated as the quotient of the molar SO₂/CO₂ ratio in the effluent and the S/C ratio in the feed.

**Table 3 Selective oxidation of thiophene in naphtha: feed composition, process conditions and results.**

| | |
|---|---|
| ppmw S | 590 |
| O₂:C | 0.003 |
| LSV (kg/kg/h) | 23.4 |
| T (°C) | 320 |
| thiophenes conversion (%) | 62.7 |
| Selectivity | 428 |

### EXAMPLE 4

### Catalyst preparation

### Catalyst 7

Particles (30-80 mesh average diameter) of zirconia partially stabilised with yttria (Y-PSZ) were coated with a zirconia paint (zirconium oxide partially-stabilised with 4 %wt CaO; type ZO; ex. ZYP Coatings Inc., Oak Ridge, USA) and provided with 2.26 wt% Ir, 0.98 wt% Zr, 1.56 wt% Ce by impregnating the painted particles with a solution containing iridium tetra chloride, zirconyl nitrate and cerium nitrate. The impregnated particles were dried at 140 °C during 2 hours and calcined at 700 °C during 2 hours.

### Catalytic selective oxidation

2.04 g of particles of catalyst 7 were diluted with 2.13 g SiC (0.05 mm) to improve heat transfer and flow properties and loaded in a 15 mm inner diameter reactor tube. A gas mixture of air and thiophene-containing methane was passed over the catalyst particles at elevated temperature and ambient pressure. Three different experiments with the same feed composition and different temperatures were carried out. The sulfur content of the feed was 210 ppmv thiophene. The O₂/C ratio was 0.005 and the GHSV 2500 Nl/kg/hr.

In Table 4, the thiophene conversion and selectivity are given for the three experiments. The selectivity is calculated as the quotient of the molar SO₂/CO₂ ratio in the effluent and the S/C ratio in the feed.

**Table 4 Selective oxidation of thiophene in methane**

| experiment | a | b | c |
|---|---|---|---|
| temperature (°C) | 220 | 250 | 300 |
| thiophenes conversion (%) | 99.8 | 99.8 | 99.8 |
| selectivity | 2380 | 1590 | 676 |

### EXAMPLE 5

2.03 g of particles of catalyst 7 were diluted with 2.2 g SiC (0.05 mm) to improve heat transfer and flow properties and loaded in a 15 mm inner diameter reactor tube. A gas mixture of air and LPG (5.9% v/v butane, balance propane) containing 50 ppmv each of H₂S, COS, ethyl mercaptan, tetrahydrothiophene and diethyl disulfide was passed over the catalyst particles at elevated temperature and ambient pressure. The O₂/C ratio was 0.002 and the GHSV 3600 Nl/kg/hr.

In Table 5, the conversion of each of the sulphur species is given for a reactor temperature of 275 °C.

**Table 5 Conversion of different sulphur species in LPG**

| | |
|---|---|
| sulphur species | conversion (%) |
| H₂S | 99.97 |
| COS | 99.9 |
| ethyl mercaptan | 99.97 |
| tetrahydrothiophene | 97 |
| diethyl disulfide | 99.9 |

The selectivity (calculated as the quotient of the molar SO₂/CO₂ ratio in the effluent and the total S/C ratio in the feed) was 65.

### EXAMPLE 6

### Catalyst preparation

### Catalyst 8

Particles (20-30 mesh average diameter) of zirconia partially stabilised with yttria (Y-PSZ) were coated with a zirconia paint (zirconium oxide partially-stabilised with 4 %wt CaO; type ZO; ex. ZYP Coatings Inc., Oak Ridge, USA) and provided with 0.81 wt% Rh, 0.78 wt% Ir, 0.98 wt% Zr, 1.57 wt% Ce by impregnating the painted particles with a solution containing rhodium tri chloride, iridium tetra chloride, zirconyl nitrate and cerium nitrate. The impregnated particles were dried at 140 °C during 2 hours and calcined at 700 °C during 2 hours.

### Catalytic selective oxidation

1.93 g of particles of catalyst 8 were mixed with 1.81 gram SiC (0.05 mm) and loaded in a 15 mm inner diameter reactor tube. A mixture of air and a hydrocracked naphtha (ex Pernis refinery, initial boiling point 91 °C, final boiling point 195 °C, containing a total of 32 ppmw S, predominantly as (substituted) thiophenes, sulphides and disulfides) was passed over the catalyst particles at two different temperatures, 250 and 270 °C, an O₂/C ratio of 0.003 and a liquid space velocity of 3.5 kg/kg/hr.

In Table 6, the sulphur conversion of the naphtha, and the selectivity are given. The conversion is based on the S analysis of the liquid product. The selectivity is calculated as the quotient of the molar SO₂/CO₂ ratio in the effluent and the S/C ratio in the feed.

**Table 6 Selective oxidation of sulphur species in naphtha**

| experiment | a | b |
|---|---|---|
| temperature (°C) | 250 | 270 |
| S conversion (%) | 88 | 92 |
| selectivity | 334 | 17 |

## Claims

1. A process for the catalytic selective oxidation of sulphur compounds in a hydrocarbonaceous feedstock to sulphur dioxide, wherein a gaseous feed mixture of the hydrocarbonaceous feedstock and a molecular-oxygen containing gas is contacted with a catalyst at a temperature of at most 500 °C, the catalyst comprising a group VIII noble metal on a catalyst carrier, wherein the oxygen-to-carbon ratio of the feed mixture is below 0.15, and wherein the sulphur dioxide formed is removed via solvent extraction using an aqueous amine solution, solvent extraction using an alkaline solution, reaction with lime or conversion into elemental sulphur according to the Claus reaction.

2. A process according to claim 1, wherein the oxygen-to-carbon ratio of the feed mixture is below 0.10.

3. A process according to claim 1 or 2, wherein the catalyst carrier is a refractory oxide, preferably a refractory oxide comprising partially stabilised or stabilised zirconia.

4. A process according to any one of the preceding claims, wherein the group VIII noble metal is Pt, Rh or Ir or a combination of two or more thereof.

5. A process according to any one of the preceding claims, wherein the catalyst is maintained at a temperature in the range of from 200 to 500 °C, preferably of from 200 to 300 °C.

6. A process according to any one of the preceding claims, wherein the feed mixture is contacted with the catalyst at a pressure in the range of from 1 to 10 bar (absolute), preferably of from 1 to 5 bar (absolute), more preferably at ambient pressure.

7. A process according to any one of the preceding claims, wherein the hydrocarbonaceous feedstock is a gaseous hydrocarbonaceous feedstock, more preferably methane or natural gas.

8. A process according to claim 7, wherein the hydrocarbonaceous feedstock comprises hydrogen sulphide in a concentration of at most 10% v/v, preferably at most 5% v/v.

9. A process according to any one of claims 1 to 6, wherein the feedstock is a liquid hydrocarbonaceous feedstock containing at most 1000 ppmw sulphur.

## Patentansprüche

1. Verfahren zur selektiven katalytischen Oxidation von Schwefelverbindungen in einem kohlenwasserstoffhältigen Einsatzmaterial zu Schwefeldioxid, wobei ein gasförmiges Einsatzmaterialgemisch des kohlenwasserstoffhältigen Einsatzmaterials und ein molekularen Sauerstoff enthaltendes Gas mit einem Katalysator bei einer Temperatur von höchstens 500°C in Kontakt gebracht wird, wobei der Katalysator ein Gruppe-VIII-Edelmetall auf einem Katalysatorträger umfasst, wobei das Sauerstoff-zu-Kohlenstoff-Verhältnis des Einsatzmaterialgemisches unter 0,15 beträgt, und wobei das gebildete Schwefeldioxid mittels Lösungsmittelextraktion unter Verwendung einer wässrigen Aminlösung, Lösungsmittelextraktion unter Verwendung einer Alkalilösung, Reaktion mit Kalk oder Umwandlung in elementaren Schwefel gemäß der Claus-Reaktion entfernt wird.

2. Verfahren nach Anspruch 1, wobei das Sauerstoff-zu-Kohlenstoff-Verhältnis des Einsatzmaterialgemisches unter 0,10 beträgt.

3. Verfahren nach Anspruch 1 oder 2, wobei der Katalysatorträger ein Feuerfestoxid, vorzugsweise ein teilweise stabilisiertes oder stabilisiertes Zirkoniumoxid umfassendes Feuerfestoxid ist.

4. Verfahren nach einem der vorstehenden Ansprüche, wobei das Gruppe-VIII-Edelmetall Pt, Rh oder Ir oder eine Kombination von zwei oder mehreren hievon ist.

5. Verfahren nach einem der vorstehenden Ansprüche, wobei der Katalysator bei einer Temperatur im Bereich von 200 bis 500°C, vorzugsweise von 200 bis 300°C, gehalten wird.

6. Verfahren nach einem der vorstehenden Ansprüche, wobei das Einsatzmaterialgemisch mit dem Katalysator bei einem Druck im Bereich von 1 bis 10 bar (absolut), vorzugsweise von 1 bis 5 bar (absolut), stärker bevorzugt bei Umgebungsdruck, in Kontakt gebracht wird.

7. Verfahren nach einem der vorstehenden Ansprüche, wobei das kohlenwasserstoffhältige Einsatzmaterial ein gasförmiges kohlenwasserstoffhältiges Einsatzmaterial, stärker bevorzugt Methan oder Erdgas ist.

8. Verfahren nach Anspruch 7, wobei das kohlenwasserstoffhältige Einsatzmaterial Wasserstoffsulfid in einer Konzentration von höchstens 10 % Vol./Vol., vorzugsweise von höchstens 5 % Vol./Vol., umfasst.

9. Verfahren nach einem der Ansprüche 1 bis 6, wobei das Einsatzmaterial ein flüssiges kohlenwasserstoffhältiges Einsatzmaterial mit höchstens 1000 ppmw Schwefel ist.

## Revendications

1. Procédé pour l'oxydation sélective catalytique de composés soufrés dans une charge d'alimentation hydrocarbonée en dioxyde de soufre, dans lequel un mélange d'alimentation gazeux de la charge d'alimentation hydrocarbonée et d'un gaz contenant de l'oxygène moléculaire est mis en contact avec un catalyseur à une température d'au plus 500°C, le catalyseur comprenant un métal noble du Groupe VIII sur un support de catalyseur, dans lequel le rapport oxygène à carbone du mélange d'alimentation est en dessous de 0,15, et dans lequel le dioxyde de soufre formé est enlevé via une extraction au solvant utilisant une solution aqueuse d'amine, une extraction au solvant utilisant une solution alcaline, une réaction avec de la chaux ou une conversion en soufre élémentaire suivant la réaction de Claus.

2. Procédé suivant la revendication 1, dans lequel le rapport oxygène à carbone du mélange d'alimentation est en dessous de 0,10.

3. Procédé suivant l'une ou l'autre des revendications 1 et 2, dans lequel le support de catalyseur est un oxyde réfractaire, avantageusement un oxyde réfractaire comprenant de la zircone partiellement stabilisée ou stabilisée.

4. Procédé suivant l'une quelconque des revendications précédentes, dans lequel le métal noble du Groupe VIII est Pt, Rh ou Ir ou une combinaison de deux de ceux-ci ou plus.

5. Procédé suivant l'une quelconque des revendications précédentes, dans lequel le catalyseur est maintenu à une température allant de 200 à 500°C, avantageusement de 200 à 300°C.

6. Procédé suivant l'une quelconque des revendications précédentes, dans lequel le mélange d'alimentation est mis en contact avec le catalyseur à une pression allant de 1 à 10 bars (absolus), avantageusement de 1 à 5 bars (absolus), plus avantageusement à la pression ambiante.

7. Procédé suivant l'une quelconque des revendications précédentes, dans lequel la charge d'alimentation hydrocarbonée est une charge d'alimentation hydrocarbonée gazeuse, plus avantageusement du méthane ou du gaz naturel.

8. Procédé suivant la revendication 7, dans lequel la charge d'alimentation hydrocarbonée comprend de l'hydrogène sulfuré en une concentration d'au plus 10 % en volume/volume, avantageusement d'au plus 5 % en volume/volume.

9. Procédé suivant l'une quelconque des revendications 1 à 6, dans lequel la charge d'alimentation est une charge d'alimentation hydrocarbonée liquide contenant au plus 1000 ppmp de soufre.
